# EUROPÄISCHE PATENTSCHRIFT

(11) **EP 4 174 450 B1**
(45) Veröffentlichungstag und Bekanntmachung des Hinweises auf die Patenterteilung: **30.04.2025**
(21) Anmeldenummer: 22202780.7
(22) Anmeldetag: 20.10.2022
(51) Int. Cl.: G01F 1/58

(54) **MAGNETISCH-INDUKTIVES DURCHFLUSSMESSGERÄT**
MAGNETIC INDUCTIVE FLOW METER
DÉBITMÈTRE MAGNÉTO-INDUCTIF

(30) Priorität: 27.10.2021 DE 102021127943
(43) Veröffentlichungstag der Anmeldung: 03.05.2023
(73) Patentinhaber: ifm electronic gmbh, 45128 Essen (DE)
(72) Erfinder: Kibele, Matthias, 88289 Waldburg (DE); Werner, Patrick, 88719 Stetten (DE); Doehring, Marc, 88326 Aulendorf (DE); Seitz, Markus, 88048 Friedrichshafen (DE)
(74) Vertreter: Ifm Patentabteilung

(56) Entgegenhaltungen:
- WO-A1-2005/057140
- US-A- 4 297 897
- US-A1- 2014 251 025

## Beschreibung

Die Erfindung betrifft ein Verfahren zum Betreiben eines magnetisch-induktiven Durchflussmessgeräts gemäß dem Oberbegriff des Anspruchs 1.

Magnetisch-induktive Durchflussmessgeräte, deren Funktionsweise auf dem Prinzip der elektromagnetischen Induktion (= Faraday'sche Induktion) beruht, sind seit vielen Jahren bekannt und werden in der industriellen Messtechnik umfangreich eingesetzt. Nach dem Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Induktionsgesetz wird bei magnetisch-induktiven Durchflussmessgeräten dadurch ausgenutzt, dass mittels einer Magnetfelderzeugungseinrichtung, die üblicherweise zwei bestromte Magnetspulen aufweist, ein Magnetfeld erzeugt wird, das wenigstens teilweise durch das Messrohr geführt wird, wobei das erzeugte Magnetfeld wenigstens eine Komponente aufweist, die senkrecht zur Strömungsrichtung verläuft. Innerhalb des Magnetfeldes liefert jedes sich durch das Magnetfeld bewegende und eine gewisse Anzahl von Ladungsträgern aufweisenden Volumenelement des strömenden Mediums mit der in diesem Volumenelement entstehenden Feldstärke einen Beitrag zu einer über die Elektroden abgreifbaren Messspannung.

Da die über die Elektroden abgegriffene induzierte Spannung proportional zur über den Querschnitt des Messrohres gemittelten Strömungsgeschwindigkeit des Mediums ist, kann aus der gemessenen Spannung bei bekanntem Durchmesser des Messrohres direkt der Volumenstrom bestimmt werden. Voraussetzung für den Einsatz eines magnetisch-induktives Durchflussmessgeräts ist lediglich eine Mindestleitfähigkeit des Mediums. Darüber hinaus muss sichergestellt sein, dass das Messrohr zumindest soweit mit dem Medium gefüllt ist, das der Pegel des Mediums oberhalb der Messelektroden liegt.

Derartige Messgeräte sind hinlänglich bekannt, beispielsweise aus den deutschen Patentschriften DE 10 2007 004 827 B4 und DE 10 2007 004 826 B4, und sind im Wesentlichen dadurch gekennzeichnet, dass die Magnetspulen sowie die Elektroden unmittelbar an bzw. in der Wandung des Messrohrs angeordnet sind.

Aus der WO 2005/057140 A1 ist ein magnetisch-induktiver Durchflussaufnehmer bekannt, bei dem das Messrohr ein Trägerrohr und einen in einem Lumen des Trägerrohrs untergebrachten, aus einem Isoliermaterial bestehenden Liner aufweist. Zur Stabilisierung ist darin ein Stützkörper eingebettet.

Um einen Kurzschluss zwischen den beiden Messelektroden zu vermeiden besteht das Messrohr aus einem nicht leitenden Werkstoff, typischerweise PFA, PP oder PTFE. Als Herausforderung hat sich dabei ergeben, bei der Montage der Messelektroden in dieses Kunststoffrohr diese gegen Durchdrehen zu sichern, da die Reibkraft zwischen dem Kunststoff und dem Elektrodenkopf zumeist nicht ausreicht, um eine Mutter anziehen zu können. Deshalb war es notwendig, die Elektrode während des Aufschraubens der Mutter, zumeist mit einem weiteren Werkzeug, gegenzuhalten.

Im Stand der Technik sind diverse Befestigungs- und Anordnungsmöglichkeiten der Elektroden eines magnetisch-induktiven Durchflussmessgeräts bekannt. Die DE 102013 103 970 A1 offenbart eine mehrteilige Elektrodenverankerung zur Befestigung einer Messelektrode, um diese auch bei hohen Mediumsdrücken oberhalb von 50 bar sicher am Messrohr zu befestigen. Die DE 10 2004 063 617 A1 offenbart, die Messelektroden so anzuordnen, dass als für das Abgreifen der induzierten Spannung wirksame Fläche im Wesentlichen nicht die Stirnfläche einer z.B. stiftförmigen Elektrode, sondern deren Seitenfläche wirkt, so dass eine größere effektive Elektrodenfläche zum Abgreifen der induzierten Spannung erzielt wird.

Aufgabe der Erfindung ist es, den Zusammenbau eines magnetisch-induktiven Durchflussmessgeräts und dabei insbesondere die Montage der Messelektroden im Messrohr zu erleichtern.

Die Aufgabe wird erfindungsgemäß durch ein magnetisch-induktives Durchflussmessgerät mit den Merkmalen des Anspruchs 1 gelöst. Vorteilhafte Ausgestaltungen der Erfindung sind in den Unteransprüchen angegeben.

Erfindungsgemäß ist an dem Messrohr an seiner Außenseite gegenüberliegend jeweils ein Einsetzteil angeordnet. Die Einsetzteile besitzen jeweils eine Durchgangsbohrung, durch die jeweils die beiden Messelektroden verlaufen. Dabei weisen die Messelektroden zumindest abschnittsweise einen nichtrunden Querschnitt auf und die besagten Durchgangsbohrungen in den beiden Einsetzteilen haben eine dazu komplementäre Kontur. Schließlich ist an den Messelektroden zumindest teilweise ein Außengewinde vorgesehen und auf dieses Außengewinde ist jeweils eine Mutter aufgeschraubt, so dass jeweils die Messelektroden sowie die dazugehörigen Einsetzteile fest mit dem Messrohr verbunden sind.

Eine vorteilhafte Weiterbildung der Erfindung sieht vor, dass das Messrohr an seiner Außenseite gegenüberliegend jeweils eine flächige Vertiefung aufweist. Diese Vertiefungen sind auf dem Messrohr so positioniert, dass sie von den beiden Messelektroden jeweils orthogonal durchdrungen werden. Des Weiteren ist in den Vertiefungen jeweils ein Einsetzteil angeordnet.

Eine weitere vorteilhafte Weiterbildung der Erfindung sieht vor, dass die in den Vertiefungen angeordneten Einsetzteile jeweils eine zur Kontur der Vertiefung komplementäre Grundfläche aufweisen. Im Ergebnis bilden sich dadurch zumindest in Längsrichtung des Messrohrs jeweils zwei Anschläge aus, durch die das jeweils in der Vertiefung angeordnete Einsetzteil axial zur Längsrichtung des Messrohrs fixiert ist.

Vorteilhafterweise haben die flächigen Vertiefungen und entsprechend die Grundflächen der Einsetzteile jeweils eine rechteckige Kontur, bevorzugt weisen sie aber zumindest einen Winkel auf, der kleiner 90° ist. Auf diese Weise kann der Umfang und damit die sich berührenden Anschlagsflächen vergrößert werden, ohne dabei die Grundflächen der Vertiefungen bzw. der Einsetzteile vergrößern zu müssen.

Eine weitere vorteilhafte Weiterbildung der Erfindung sieht vor, dass auf die Grundflächen der Einsetzteile jeweils ein im Wesentlichen zylindrischer Aufbau angeordnet ist, in dessen Mittelpunkt sich die Durchgangsbohrung befindet und dessen Umfang wenigstens eine nach außen gerichtete Erweiterung aufweist. Diese Ausbildung ist besonders dann vorteilhaft, wenn jeweils zwischen Einsetzteil und Mutter eine Scheibe angeordnet ist, die ebenfalls eine zum nichtrunden Querschnitt der Messelektroden komplementäre Durchgangsbohrung aufweist, durch die jeweils die beiden Messelektroden verlaufen, und die komplementär zum Umfang des zylindrischen Aufbaus des Einsetzteils auch wenigstens eine nach außen gerichtete Erweiterung aufweist. Wenn in die nach außen gerichtete Erweiterung eine komplementär dazu ausgebildete Scheibe eingreift, bietet das dann den Vorteil, dass dann noch größere Drehmomente übertragen werden können. Weitere nach außen gerichtete Erweiterung wären vorteilhaft, um das Drehmoment besser von dem zylindrischen Aufbau auf die Grundfläche des Einsetzteils zu übertragen.

Der Begriff "Scheibe" ist im Sinne der Erfindung auch so zu verstehen, dass damit auch ein Dreh-Fräs-Teil mit einer gegenüber einer typischen Scheibe etwas dickeren bzw. höheren Ausbildung mit umfasst ist.

Alternativ zu der nach außen gerichteten Erweiterung kann die Scheibe auch eine kantenförmige Kontur aufweisen, insbesondere eine Ausbildung als Vier- oder Sechskant. Entsprechend weisen die Einsetzteile auch eine dazu komplementäre kantenförmige, insbesondere vier- oder sechskantförmige Kontur auf.

Um die Elektroden elektrisch zu kontaktieren, d.h. die induzierte Spannung abzugreifen, ist bevorzugt vorgesehen, jeweils zwischen Einsetzteil und Mutter einen scheibenförmigen Steckkontakt anzuordnen.

Eine weitere vorteilhafte Weiterbildung sieht vor, dass jeweils zwischen Einsetzteil und Mutter ein Federelement angeordnet ist. Das Federelement, vorzugsweise als Tellerfeder ausgebildet, wird beim Aufschrauben der Mutter vorgespannt. Durch diese definierte Vorspannung wird erreicht, dass an der Messrohrinnenseite eine für die Dichtigkeit zwischen Elektrodenkopf und dem Kunststoffmessrohr erforderliche Flächenpressung garantiert wird.

Eine weitere vorteilhafte Weiterbildung sieht vor, dass das Außengewinde der Messelektroden in Umfangsrichtung durch wenigstens eine ausgesparte Facette unterbrochen ist. Dadurch wird auf einfache Weise der für die Erfindung notwendige nichtrunde Querschnitt der Messelektroden erreicht.

Kern der Erfindung ist es, das während des Aufschraubens der Mutter entstehende Drehmoment gewissermaßen in mehreren Zwischenschritten auf das Messrohr zu übertragen. Zunächst wird das Drehmoment von der Mutter auf die Messelektrode übertragen, welche es aufgrund ihres nichtrunden Querschnitts auf das Einsetzteil mit seinem zum Querschnitt der Messelektrode komplementär ausgebildeten Durchgangsbohrung weitergibt. Über das Einsetzteil wird das Drehmoment schließlich auf das Messrohr übertragen. Wenn vorteilhafterweise die in den Vertiefungen angeordneten Einsetzteile jeweils eine zur Kontur der Vertiefung komplementäre Grundfläche aufweisen und das Einsetzteil zumindest in Längsrichtung des Messrohrs durch die zwei Anschläge axial fixiert ist, wird das Drehmoment über die besagten Anschläge entsprechend von dem Messrohr aufgenommen, ohne dass es zu einem Durchdrehen kommt. Ohne diese beiden Anschläge müsste das Einsetzteil gegebenenfalls während des Festziehens der Mutter einfach händisch fixiert werden. In beiden Fällen reduziert sich das auf das Messrohr einwirkende Drehmoment durch die nun gegenüber dem Elektrodenquerschnitt größere Grundfläche des Einsetzteils und der Montageaufwand insgesamt jeweils deutlich.

Es ist also nicht mehr notwendig, die Elektrode bei der Montage oberhalb der Mutter gegenzuhalten und damit gegen ein Verdrehen zu sichern. Die Elektrodenstifte können daher jetzt deutlich kürzer ausgestaltet sein und mit der Mutter bspw. quasi bündig abschließen.

Nachfolgend wird die Erfindung anhand von Ausführungsbeispielen unter Bezugnahme auf die Zeichnungen näher erläutert.

Es zeigen schematisch:
- Figur 1: eine erste Ausführungsform eines magnetisch-induktiven Durchflussmessgeräts mit der erfindungsgemäßen Verdrehsicherung in Explosionsdarstellung;
- Figur 2: das magnetisch-induktive Durchflussmessgerät aus Fig. 1 in Seitenansicht ohne die erfindungsgemäße Verdrehsicherung;
- Figur 3: die erfindungsgemäße Verdrehsicherung aus Fig. 1 in Schnittdarstellung;
- Figur 4: eine zweite Ausführungsform eines magnetisch-induktiven Durchflussmessgeräts mit der erfindungsgemäßen Verdrehsicherung in Explosionsdarstellung;
- Figur 5: eine dritte Ausführungsform eines magnetisch-induktiven Durchflussmessgeräts mit der erfindungsgemäßen Verdrehsicherung in Explosionsdarstellung und
- Figur 6: die erfindungsgemäße Verdrehsicherung aus Fig. 5 in Schnittdarstellung.

Bei der nachfolgenden Beschreibung der bevorzugten Ausführungsformen bezeichnen gleiche Bezugszeichen gleiche oder vergleichbare Komponenten.

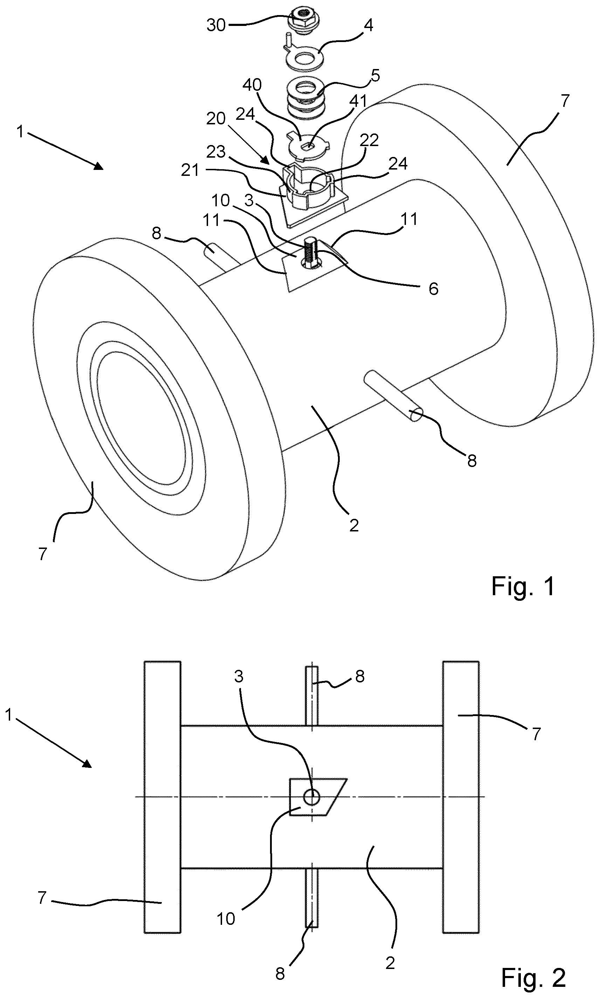

In Figur 1 ist ein magnetisch-induktives Durchflussmessgerät 1 abgebildet, mit einem unverkleidetem Messrohr 2, den beiden Flanschen 7 zum Anschluss an eine Rohrleitung, zwei Gewindestifte 8, auf die die für die Durchflussmessung notwendige Magnetfelderzeugungseinrichtung montiert wird, und eine von zwei stiftartigen Messelektroden 3. Der für die erfindungsgemäße Verdrehsicherung und für die Fixierung der Elektrode 3 am Messrohr 2 an sich notwendige Aufbau ist in Explosionsdarstellung abgebildet. Auch wenn in Fig. 1 nur eine Messelektrode 3 mit der Verdrehsicherung dargestellt ist, so gilt dies selbstverständlich auch für die in der Zeichnung verdeckte zweite Messelektrode auf der gegenüberliegenden Seite des Messrohrs 2.

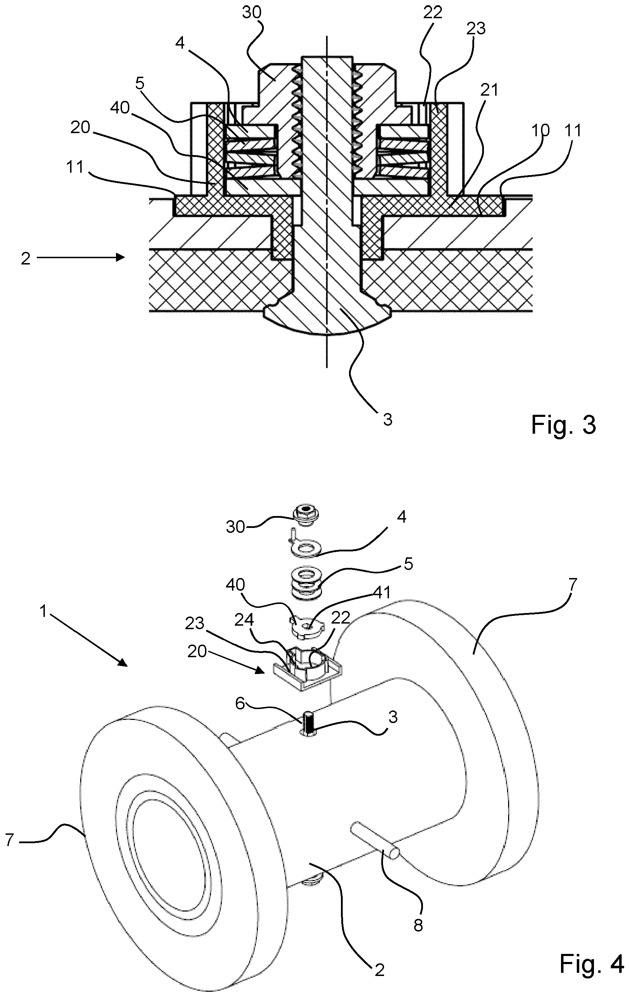

Den Grundstein der Verdrehsicherung bildet vorliegend eine flächige Vertiefung 10 auf der Außenseite des Messrohrs 2, wobei grundsätzlich auch eine Ausführung ohne Vertiefung 10 vorstellbar ist (siehe Fig. 4). Diese Vertiefung 10 ist auf dem Messrohr 2 so positioniert, dass sie von der Messelektrode 3 orthogonal durchdrungen wird. In die Vertiefung 10 wird ein Einsetzteil 20 eingesetzt, dessen Grundfläche eine Kontur aufweist, die zur Kontur der Vertiefung komplementär ausgeführt ist. Durch die Vertiefung 10 ergeben sich zumindest in Längsrichtung des Messrohrs 2 zwei Anschläge 11, durch die das in der Vertiefung 10 angeordnete Einsetzteil 20 axial zur Längsrichtung des Messrohrs 2 fixiert ist. Je nachdem, wie tief die Vertiefung 10 ausgeführt ist, können sich auch in Querrichtung Anschläge ausbilden. Vorteilhafterweise ist die Kontur der Vertiefung 10 nicht rechteckförmig, sondern zumindest ein Winkel ist kleiner 90°. Auf diese Weise kann der Umfang und damit die sich berührenden Anschlagsflächen vergrößert werden, ohne dabei die Grundfläche der Vertiefung 10 und des Einsetzteils 20 vergrößern zu müssen.

Das Einsetzteil 20 besitzt eine Durchgangsbohrung 22, die in Fig. 1 nur teilweise zu erkennen ist. Durch diese Durchgangsbohrung 22 verläuft im montierten Zustand die Messelektrode 3. Die Messelektrode 3 muss im Bereich der Durchgangsbohrung 22 einen nichtrunden Querschnitt aufweisen, was in Fig. 1 dadurch realisiert wurde, dass ein Außengewinde der Messelektrode 3 in Umfangsrichtung durch eine ausgesparte Facette 6 unterbrochen ist. Entsprechend dem nichtrunden Querschnitt der Messelektrode 3 weist die Durchgangsbohrung 22 im Einsetzteil 20 eine dazu komplementäre Kontur auf.

Das Einsetzteil 20 ist des Weiteren dadurch gekennzeichnet, dass auf der Grundfläche 21 ein im Wesentlichen zylindrischer Aufbau 23 aufgesetzt ist. Im Mittelpunkt dieses Aufbaus 23 befindet sich die Durchgangsbohrung 22. Der Umfang des Aufbaus 23 ist durch drei nach außen gerichtete Erweiterungen 24 gekennzeichnet, wovon eine etwas größer ausfällt als die beiden anderen.

In diese spezielle Kontur mit den drei Erweiterungen 24 ist eine Scheibe 40 angeordnet, die ebenfalls eine zum nichtrunden Querschnitt der Messelektrode 3 komplementäre Durchgangsbohrung 41 aufweist und die komplementär zur Kontur des zylindrischen Aufbaus 23 des Einsetzteils 20 auch drei eine nach außen gerichtete Erweiterung aufweist. Dadurch können dann noch größere Drehmomente übertragen werden.

Auf die Scheibe 40 wird ein Federelement 5 auf die Messelektrode 3 aufgesetzt. Das Federelement 5, vorliegend als Tellerfeder ausgebildet, stellt mittels einer gewissen Vorspannung sicher, dass im Inneren des Messrohrs 2 eine für die Dichtigkeit zwischen Elektrodenkopf und dem Kunststoffmessrohr erforderliche Flächenpressung garantiert wird.

Um die Messelektrode 3 elektrisch zu kontaktieren, d.h. die induzierte Spannung abzugreifen, wird noch ein scheibenförmiger Steckkontakt 4 auf die Messelektrode 3 aufgesetzt.

Schließlich wird auf das Außengewinde der Messelektrode 3 eine Mutter 30 aufgeschraubt, so dass jeweils die Messelektroden 3 sowie die dazwischenliegenden Elemente Einsetzteil 20, Scheibe 40, Federelement 5 und Steckkontakt 4 fest mit dem Messrohr 3 verbunden sind.

Während des Aufschraubens der Mutter 30 wird im Ergebnis das dabei entstehende Drehmoment in mehreren Zwischenschritten auf das Messrohr 3 zu übertragen. Zunächst wird das Drehmoment von der Mutter 30 auf die Messelektrode 3 übertragen, welche es aufgrund ihres nichtrunden Querschnitts auf das Einsetzteil 20 mit seinem zum Querschnitt der Messelektrode 3 komplementär ausgebildeten Durchgangsbohrung 22 weitergibt. Durch die Scheibe 40 und das Eingreifen der drei nach außen gerichteten Erweiterungen in die entsprechenden Gegenstücke des zylindrischen Aufbaus 23 des Einsetzteils 20 wird das Drehmoment nicht nur über die Durchgangsbohrung 22 übertragen, sondern zusätzlich auch über diese nach außen gerichteten Erweiterungen 24. Da das Einsetzteil 20 zumindest in Längsrichtung des Messrohrs 3 durch die zwei Anschläge 11 fixiert ist, wird das Drehmoment schließlich auf das Messrohr 3 übertragen. Durch die nun gegenüber dem Elektrodenquerschnitt größere Grundfläche 21 des Einsetzteils 20 reduziert sich das auf das Messrohr 3 einwirkende Drehmoment deutlich und kann durch die Anschläge 11 entsprechend von dem Messrohr 3 aufgenommen werden, ohne dass es zu einem Durchdrehen kommt.

In Figur 2 ist das erfindungsgemäße magnetisch-induktive Durchflussmessgerät 1, mit Messrohr 2, den beiden Flanschen 7, mittig die Elektrode 3 in der flächigen Vertiefung 10 sowie radial abstehend die beiden Gewindestifte 8 für die Magnetfelderzeugungseinrichtung, in Seitenansicht ohne die erfindungsgemäße Verdrehsicherung dargestellt.

In Figur 3 ist die erfindungsgemäße Verdrehsicherung in Schnittdarstellung abgebildet, so dass ersichtlich ist, wie der in Fig. 1 in Explosionsdarstellung abgebildete Aufbau im zusammengebauten Zustand aussieht. Zu erkennen ist, wie die Messelektrode 3 durch das Messrohr 2 verläuft, wie das Einsetzteil 20 gewissermaßen als Fundament für den gesamten Aufbau fungierend in der flächigen Vertiefung 10 an der Oberseite des Messrohrs 2 eingesetzt ist und wie innerhalb des zylindrischen Aufbaus 23 des Einsetzteils 20 die einzelnen Elemente Scheibe 40, Federelement 5, Steckkontakt 4 und Mutter 40 zueinander angeordnet sind.

Die Figur 4 zeigt ein Ausführungsbeispiel ohne Vertiefung 10 im Messrohr 2. Alles andere ist soweit identisch, so dass zur Vermeidung von Wiederholungen auf die Beschreibung der Fig. 1 verwiesen wird.

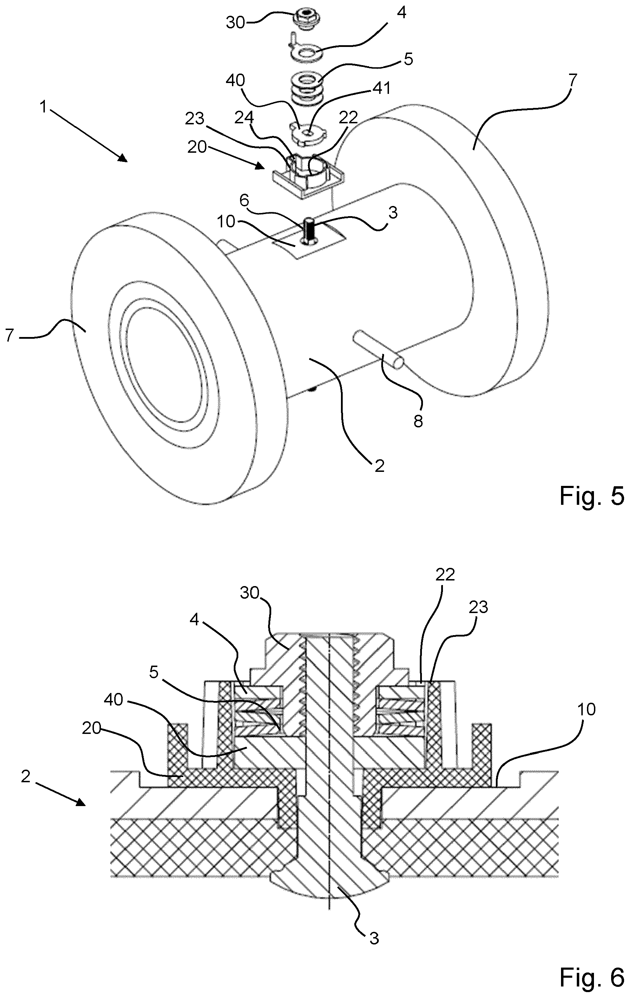

Die Figuren 5 und 6 zeigen ein weiteres Ausführungsbeispiel der Erfindung. Der wesentliche Aufbau entspricht dem aus den vorhergehenden Figuren, so dass zur Vermeidung von Wiederholungen auf diese verwiesen wird. Der Unterschied besteht darin, dass die Vertiefung 10 und die Grundfläche des Einsetzteils 20 keine zueinander komplementären Konturen aufweisen. Infolgedessen bilden sich dann, wie aus Fig. 6 ersichtlich, in Längsrichtung des Messrohrs 2 keine Anschläge 11 aus. Während des Festziehens der Mutter 30 müsste das Einsetzteil 20 dann gegebenenfalls einfach händisch fixiert werden. Hierfür weist das Einsetzteil 20 vorteilhaferweise einen umlaufenden Rand auf, durch den die händische Fixierung vorgenommen werden kann.

In beiden Ausführungsformen reduziert sich das auf das Messrohr 2 einwirkende Drehmoment durch die nun gegenüber dem Elektrodenquerschnitt größere Grundfläche des Einsetzteils 20 deutlich und die Messelektroden 3 können trotz kompakter Bauweise einfach im Messrohr 2 montiert werden.

### Bezugszeichenliste

- 1: Magnetisch-induktives Durchflussmessgerät
- 2: Messrohr
- 3: Messelektrode
- 4: Steckkontakt
- 5: Federelement
- 6: Facette
- 7: Flansch
- 8: Gewindestift
- 10: flächige Vertiefung
- 11: Anschlag
- 20: Einsetzteil
- 21: Grundfläche
- 22: Durchgangsbohrung
- 23: zylindrischer Aufbau
- 24: nach außen gerichtet Erweiterung
- 30: Mutter
- 40: Scheibe
- 41: Durchgangsbohrung

## Patentansprüche

1. Magnetisch-induktives Durchflussmessgerät zur Messung des Durchflusses eines strömenden, leitfähigen Mediums, mit einem aus einem nicht leitenden Werkstoff bestehenden Messrohr (2), mit einer Magnetfelderzeugungseinrichtung zur Erzeugung eines das Messrohr (2) senkrecht zur Längsachse des Messrohrs (2) durchsetzenden Magnetfeldes und mit zwei stiftförmigen Messelektroden (3) zum Abgreifen einer in dem strömenden Medium induzierten Messspannung,
wobei die Messelektroden (3) entlang einer senkrecht zur Längsachse des Messrohres (2) und senkrecht zur Magnetfeldrichtung verlaufenden Verbindungslinie angeordnet sind,
**dadurch gekennzeichnet,**
**dass** an dem Messrohr (2) an seiner Außenseite gegenüberliegend jeweils ein Einsetzteil (20) angeordnet ist,
wobei die Einsetzteile (20) jeweils eine Durchgangsbohrung (22) aufweisen, durch die jeweils die beiden Messelektroden (3) verlaufen,
wobei die Messelektroden (3) wenigstens abschnittsweise einen nichtrunden Querschnitt aufweisen und die Durchgangsbohrungen (12) der beiden Einsetzteile (20) eine dazu komplementäre Kontur aufweisen
und wobei die stiftförmigen Messelektroden (3) zumindest teilweise ein Außengewinde aufweisen und darauf jeweils eine Mutter (30) aufgeschraubt ist, durch die jeweils die Messelektroden (3) sowie die dazugehörigen Einsetzteile (20) fest mit dem Messrohr (2) verbunden sind.

2. Magnetisch-induktives Durchflussmessgerät nach Anspruch 1,
**dadurch gekennzeichnet, dass** das Messrohr (2) an seiner Außenseite gegenüberliegend jeweils eine flächige Vertiefung (10) aufweist, die von den beiden Messelektroden (3) jeweils orthogonal durchdrungen werden, und dass in den Vertiefungen (10) jeweils ein Einsetzteil (20) angeordnet ist

3. Magnetisch-induktives Durchflussmessgerät nach Anspruch 2,
**dadurch gekennzeichnet, dass** in den Vertiefungen (10) jeweils ein Einsetzteil (20) mit einer zur Kontur der Vertiefung (10) komplementären Grundfläche (21) angeordnet ist, so dass sich zumindest in Längsrichtung des Messrohrs (2) zwei Anschläge (11) ausbilden, durch die die Einsetzteile (20) axial zur Längsrichtung des Messrohrs (2) fixiert sind.

4. Magnetisch-induktives Durchflussmessgerät nach Anspruch 3,
**dadurch gekennzeichnet, dass** die flächigen Vertiefungen (10) und entsprechend die Grundflächen (21) der Einsetzteile (20) jeweils eine rechteckige Kontur aufweisen.

5. Magnetisch-induktives Durchflussmessgerät nach Anspruch 3,
**dadurch gekennzeichnet, dass** die flächigen Vertiefungen (10) und entsprechend die Grundflächen (21) der Einsetzteile (20) jeweils eine Kontur mit zumindest einem Winkel kleiner 90° aufweisen.

6. Magnetisch-induktives Durchflussmessgerät nach einem der vorhergehenden Ansprüche,
**dadurch gekennzeichnet, dass** auf die Grundflächen (21) der Einsetzteile (20) jeweils ein im Wesentlichen zylindrischer Aufbau (23) angeordnet ist, in dessen Mittelpunkt sich die Durchgangsbohrung (22) befindet und dessen Umfang wenigstens eine nach außen gerichtete Erweiterung (24) oder eine kantenförmige, insbesondere eine vier- oder sechskantförmige Kontur aufweist.

7. Magnetisch-induktives Durchflussmessgerät nach Anspruch 6,
**dadurch gekennzeichnet, dass** jeweils zwischen Einsetzteil (20) und Mutter (30) eine Scheibe (40) angeordnet ist, die ebenfalls eine zum nichtrunden Querschnitt der Messelektroden (3) komplementäre Durchgangsbohrung (41) aufweist, durch die jeweils die beiden Messelektroden (3) verlaufen, und die komplementär zum Umfang des zylindrischen Aufbaus (23) des Einsetzteils (20) auch wenigstens eine nach außen gerichtete Erweiterung aufweist.

8. Magnetisch-induktives Durchflussmessgerät nach Anspruch 6,
**dadurch gekennzeichnet, dass** jeweils zwischen Einsetzteil (20) und Mutter (30) eine Scheibe (40) angeordnet ist, die ebenfalls eine zum nichtrunden Querschnitt der Messelektroden (3) komplementäre Durchgangsbohrung (41) aufweist, durch die jeweils die beiden Messelektroden (3) verlaufen, und die komplementär zum Umfang des zylindrischen Aufbaus (23) des Einsetzteils (20) auch eine kantenförmige, insbesondere eine vier- oder sechskantförmige Kontur aufweist.

9. Magnetisch-induktives Durchflussmessgerät nach einem der vorhergehenden Ansprüche,
**dadurch gekennzeichnet, dass** jeweils zwischen Einsetzteil (20) und Mutter (30) ein scheibenförmiger Steckkontakt (4) zur elektrischen Kontaktierung der Messelektrode (3) angeordnet ist.

10. Magnetisch-induktives Durchflussmessgerät nach einem der vorhergehenden Ansprüche,
**dadurch gekennzeichnet, dass** jeweils zwischen Einsetzteil (20) und Mutter (30) ein Federelement (5) angeordnet ist.

11. Magnetisch-induktives Durchflussmessgerät nach einem der vorhergehenden Ansprüche,
**dadurch gekennzeichnet, dass** das Außengewinde der Messelektroden (3) in Umfangsrichtung durch wenigstens eine ausgesparte Facette (6) unterbrochen ist.

## Claims

1. Magnetic-inductive flowmeter for measuring the flow of a flowing, conductive medium, comprising a measuring tube (2) made of a non-conductive material, with a
magnetic field generating device for generating a magnetic field passing through the measuring tube (2) perpendicularly to the longitudinal axis of the measuring tube (2) and with two pin-shaped measuring electrodes (3) for tapping a measuring voltage induced in the flowing medium,
the measuring electrodes (3) being arranged along a connecting line running perpendicularly to the longitudinal axis of the measuring tube (2) and perpendicularly to the magnetic field direction,
**characterized in that**
an insert part (20) is arranged on each side of the measuring tube (2) on the outer face, the insert parts being opposite each other,
the insert parts (20) each having a through-hole (22) through which the two measuring electrodes (3) run,
the measuring electrodes (3) having a non-circular cross-section at least in portions and the through-holes (12) of the two insert parts (20) having a contour complementary thereto
and the pin-shaped measuring electrodes (3) at least partially having an external thread and a nut (30) being screwed onto each of them, by means of which the measuring electrodes (3) and the associated insert parts (20) are firmly connected to the measuring tube (2).

2. Magnetic-inductive flowmeter according to claim 1,
**characterized in that** the measuring tube (2) has a flat recess (10) on each side on its outer face, which recesses are opposite each other and are penetrated orthogonally by the two measuring electrodes (3), **and in that** an insert part (20) is arranged in each of the recesses (10).

3. Magnetic-inductive flowmeter according to claim 2,
**characterized in that** an insert part (20) with a base surface (21) complementary to the contour of the particular recess (10) is arranged in each of the recesses (10), so that two stops (11) are formed at least in the longitudinal direction of the measuring tube (2), by means of which the insert parts (20) are fixed axially to the longitudinal direction of the measuring tube (2).

4. Magnetic-inductive flowmeter according to claim 3,
**characterized in that** the flat recesses (10) and correspondingly the base surfaces (21) of the insert parts (20) each have a rectangular contour.

5. Magnetic-inductive flowmeter according to claim 3,
**characterized in that** the flat recesses (10) and correspondingly the base surfaces (21) of the insert parts (20) each have a contour with at least one angle of less than 90°.

6. Magnetic-inductive flowmeter according to any of the preceding claims,
**characterized in that** a substantially cylindrical structure (23) is arranged on the base surfaces (21) of the insert parts (20), in the center of which the through-hole (22) is located and the circumference of which has at least one outwardly directed extension (24) or an edge-shaped, in particular a square or hexagonal, contour.

7. Magnetic-inductive flowmeter according to claim 6,
**characterized in that** a disk (40) is arranged between the insert part (20) and the nut (30), which disk also has a through-hole (41) complementary to the non-circular cross-section of the measuring electrodes (3), through which the two measuring electrodes (3) each run, and which also has at least one outwardly directed extension complementary to the circumference of the cylindrical structure (23) of the insert part (20).

8. Magnetic-inductive flowmeter according to claim 6,
**characterized in that** a disk (40) is arranged between the insert part (20) and the nut (30), which disk also has a through-hole (41) complementary to the non-circular cross-section of the measuring electrodes (3), through which the two measuring electrodes (3) each run, and which also has an edge-shaped, in particular a square or hexagonal, contour complementary to the circumference of the cylindrical structure (23) of the insert part (20).

9. Magnetic-inductive flowmeter according to any of the preceding claims,
**characterized in that** a disk-shaped plug contact (4) for electrically contacting the measuring electrode (3) is arranged between the insert part (20) and the nut (30).

10. Magnetic-inductive flowmeter according to any of the preceding claims,
**characterized in that** a spring element (5) is arranged between the insert part (20) and the nut (30).

11. Magnetic-inductive flowmeter according to any of the preceding claims,
**characterized in that** the external thread of the measuring electrodes (3) is interrupted in the circumferential direction by at least one recessed facet (6).

## Revendications

1. Débitmètre à induction magnétique permettant de mesurer le débit d'un milieu conducteur en écoulement, comportant un tube de mesure (2) constitué d'un matériau non conducteur, comportant un
dispositif de génération de champ magnétique permettant de générer un champ magnétique traversant le tube de mesure (2) perpendiculairement à l'axe longitudinal du tube de mesure (2) et comportant deux électrodes de mesure (3) en forme de tige pour la mesure d'une tension de mesure induite dans le milieu en écoulement,
dans lequel les électrodes de mesure (3) sont disposées le long d'une ligne de connexion s'étendant perpendiculairement à l'axe longitudinal du tube de mesure (2) et perpendiculairement à la direction du champ magnétique,
caractérisé en ce
**qu**'une pièce d'insertion (20) est respectivement disposée sur le tube de mesure (2) sur son côté extérieur opposé,
dans lequel les pièces d'insertion (20) présentent respectivement un alésage de passage (22) à travers lequel s'étendent respectivement les deux électrodes de mesure (3),
dans lequel les électrodes de mesure (3) présentent au moins dans certaines sections une section transversale non ronde et les alésages de passage (12) des deux pièces d'insertion (20) présentent un contour qui lui est complémentaire
et dans lequel les électrodes de mesure (3) en forme de tige présentent au moins partiellement un filetage extérieur et respectivement un écrou (30) y est vissé, lequel écrou relie de manière fixe les électrodes de mesure (3) respectives ainsi que les pièces d'insertion (20) correspondantes au tube de mesure (2).

2. Débitmètre à induction magnétique selon la revendication 1,
**caractérisé en ce que** le tube de mesure (2) présente sur son côté extérieur, en face l'un de l'autre, respectivement un renfoncement (10) plat traversé orthogonalement par les deux électrodes de mesure (3), **et en ce que** respectivement une pièce d'insertion (20) est disposée dans les renfoncements (10).

3. Débitmètre à induction magnétique selon la revendication 2,
**caractérisé en ce que** respectivement une pièce d'insertion (20) comportant une surface de base (21) complémentaire au contour du renfoncement (10) est disposée dans les renfoncements (10), de sorte qu'au moins deux butées (11) se forment dans la direction longitudinale du tube de mesure (2), lesquelles fixent les pièces d'insertion (20) axialement par rapport à la direction longitudinale du tube de mesure (2).

4. Débitmètre à induction magnétique selon la revendication 3,
**caractérisé en ce que** les renfoncements (10) plats et, de manière correspondante, les surfaces de base (21) des pièces d'insertion (20) présentent respectivement un contour rectangulaire.

5. Débitmètre à induction magnétique selon la revendication 3,
**caractérisé en ce que** les renfoncements (10) plats et, de manière correspondante, les surfaces de base (21) des pièces d'insertion (20) présentent respectivement un contour comportant au moins un angle inférieur à 90°.

6. Débitmètre à induction magnétique selon l'une des revendications précédentes,
**caractérisé en ce que** respectivement une structure (23) sensiblement cylindrique est disposée sur les surfaces de base (21) des pièces d'insertion (20), structure au centre de laquelle se trouve l'alésage de passage (22) et dont la circonférence présente au moins un élargissement (24) dirigé vers l'extérieur ou un contour en forme d'arête, en particulier un contour quadrangulaire ou hexagonal.

7. Débitmètre à induction magnétique selon la revendication 6,
**caractérisé en ce que** respectivement une rondelle (40) est disposée entre la pièce d'insertion (20) et l'écrou (30), laquelle rondelle présente également un alésage de passage (41) complémentaire à la section transversale non ronde des électrodes de mesure (3), à travers lequel s'étendent respectivement les deux électrodes de mesure (3), et lequel présente également au moins un élargissement dirigé vers l'extérieur qui est complémentaire à la circonférence de la structure (23) cylindrique de la pièce d'insertion (20).

8. Débitmètre à induction magnétique selon la revendication 6,
**caractérisé en ce que** respectivement une rondelle (40) est disposée entre la pièce d'insertion (20) et l'écrou (30), laquelle rondelle présente également un alésage de passage (41) complémentaire à la section transversale non ronde des électrodes de mesure (3), à travers lequel s'étendent respectivement les deux électrodes de mesure (3), et lequel présente également un contour en forme d'arête, en particulier un contour quadrangulaire ou hexagonal et qui est complémentaire à la circonférence de la structure (23) cylindrique de la pièce d'insertion (20).

9. Débitmètre à induction magnétique selon l'une des revendications précédentes,
**caractérisé en ce qu'**un contact enfichable (4) en forme de rondelle est disposé respectivement entre la pièce d'insertion (20) et l'écrou (30) pour la mise en contact électrique de l'électrode de mesure (3).

10. Débitmètre à induction magnétique selon l'une des revendications précédentes,
**caractérisé en ce qu'**un élément élastique (5) est disposé respectivement entre la pièce d'insertion (20) et l'écrou (30).

11. Débitmètre à induction magnétique selon l'une des revendications précédentes,
**caractérisé en ce que** le filetage extérieur des électrodes de mesure (3) est interrompu dans la direction circonférentielle par au moins une facette (6) évidée.
